# EUROPÄISCHE PATENTSCHRIFT

(11) **EP 3 444 104 B1**
(45) Veröffentlichungstag und Bekanntmachung des Hinweises auf die Patenterteilung: **05.02.2020**
(21) Anmeldenummer: 17186735.1
(22) Anmeldetag: 17.08.2017
(51) Int. Cl.: B29C 65/02, B29C 65/36, B29C 65/48, B29C 65/50, B29C 65/52, B29L 23/20

(54) **VERFAHREN ZUM HERSTELLEN VON VERPACKUNGSTUBEN SOWIE VERPACKUNGSTUBE**
METHOD FOR PRODUCING PACKAGING TUBES AND PACKAGING TUBE
PROCÉDÉ DE FABRICATION DE TUBES D'EMBALLAGE AINSI QUE TUBE D'EMBALLAGE

(43) Veröffentlichungstag der Anmeldung: 20.02.2019
(73) Patentinhaber: PackSys Global AG, 8630 Rüti (CH)
(72) Erfinder: ESSER, Ulrich, 8630 Rüti (CH)
(74) Vertreter: Patentanwälte Behrmann Wagner PartG mbB

(56) Entgegenhaltungen:
- DE-A1- 2 524 155
- US-A- 5 549 999
- US-A1- 2011 052 854

## Beschreibung

Die Erfindung betrifft ein Verfahren gemäß dem Oberbegriff des Anspruchs 1 zum Herstellen von Verpackungstuben aus einem, bevorzugt auf einer Außenseite eine Bedruckung, bevorzugt inklusive Klarlackschicht, aufweisenden, Foliensubstrat, welches mindestens eine verschweißbare Kunststoffschicht, insbesondere aus PE, HDPE, oder andere Polyolefine oder LDPE, aufweist oder aus dieser besteht und welches eine sich in eine Längsrichtung erstreckende erste Längsrandseite und eine hierzu parallele und beabstandete zweite Längsrandseite umfasst, wobei das Foliensubstrat mit Umformmitteln zu einer Rohrform geformt und die beiden Längsrandseiten unter Ausbildung einer Längsschweißnaht miteinander verschweißt werden. Bevorzugt kommt als Foliensubstrat ein mehrschichtiges, bevorzugt eine Barriereschicht gegen Sauerstoff-und/oder Feuchtigkeitsdurchtritt umfassendes Laminat zum Einsatz. Im Hinblick auf die konkrete Realisierung des Schweißverfahrens gibt es dabei unterschiedliche Möglichkeiten. Bevorzugt ist eine Ausführungsform, bei der die Längsrandseiten zum miteinander Verschweißen in Kontakt gebracht werden, ganz besonders bevorzugt auf Stoß oder alternativ überlappend und dann, beispielsweise mit einer Induktionsschweißeinrichtung unter Ausbildung einer materialschlüssigen Verbindung verschweißt werden. Auch ist es denkbar, die Längsrandseiten zu verschweißen mittels mindestens eines zusätzlichen Kunststoffstreifens, der mit beiden Längsrandseiten verschweißt wird, wobei die Längsrandseiten sich alternativ kontaktieren, insbesondere auf Stoß angeordnet werden oder überlappen, oder unter Einhaltung eines (geringen) Spaltes einander gegenüberliegend bzw. mit geringem Abstand zueinander angeordnet werden. Eine weitere alternative Realisierung des Verschweißverfahrens sieht vor, die beiden Längsrandseiten durch Aufbringen einer plastifizierten, erhitzten (geschmolzenen), insbesondere extrudierten Kunststoffschnur miteinander zu verschweißen, wobei auch hierzu die Längsrandseiten alternativ in Kontakt gebracht oder auf (geringem) Abstand zueinander gehalten werden können. Unabhängig von der Wahl des konkreten Schweißverfahrens werden jedenfalls die Längsrandseiten entweder unmittelbar und/oder mittelbar, ggf. über ein zusätzliches Kunststoffelement, insbesondere einen Kunststoffstreifen oder eine plastifizierte Kunststoffschnur, unter Ausbildung einer Längsschweißnaht miteinander verbunden, wobei das unmittelbare Kontaktieren der Längsrandseiten durch eine zuvor beschriebene Anordnung auf Stoß oder alternativ überlappend die bevorzugten Schweißverfahren darstellen, auf die die Erfindung jedoch nicht beschränkt ist.

Ferner betrifft die Erfindung eine Verpackungstube, umfassend einen Tubenrohrkörper aus einem mindestens eine verschweißbare Kunststoffschicht aufweisenden oder daraus bestehenden Foliensubstrat, insbesondere einem Folienlaminatwobei der mit einem Tubenkopf verbundene Tubenrohrkörper eine Längsschweißnaht aufweist, an der zwei Längsrandseiten des Foliensubstrates, insbesondere miteinander, verschweißt sind.

Bisher wurden viele Versuche unternommen, die potentielle Schwachstelle der Längsschweißnaht bei durch Längsverschweißen von Längsrandseiten hergestellten Tubenrohrkörpern für Verpackungstuben zu verstärken.

Aus der EP 2 720 0849 B1 der Anmeldern ist es hierzu bekannt geworden, die Längsrandseiten des Foliensubstrates mit unterschiedlichen Winkeln zu versehen, was gleichzeitig den Vorteil einer quasi unsichtbaren Längschweißnaht mit sich bringt.

In der EP 2 007 567 B1 ist ein alternatives Verfahren beschrieben, bei dem die Längsrandseiten mit einem zusätzlichen, vergleichsweise dick auftragenden Kunststoffstreifen verschweißt werden, der gemäß einer beschriebenen Ausführungsvariante auf einer Tubenrohraußenseite oder alternativ sowohl auf der Tubenrohraußenseite als auch auf der Tubenrohrinnenseite angeordnet wird.

Die zwischenzeitlich im Einspruchsverfahren widerrufene EP 2 089 213 B1 beschreibt ein Verfahren, bei welchem die Längsrandseiten des Foliensubstrates mit einer plastifizierten, extrudierten Kunststoffschnur miteinander verschweißt werden, wobei diese Kunststoffschnur auf der Tubenrohrkörperinnenseite flachgedrückt bzw. verbreitert wird und somit die Längsschweißnaht verstärkt.

Die DE 25 24 155 A1 lehrt zudem eine kontinuierlich arbeitende Maschine zum Formen von tubenförmigen Kunststoffbehältern. Derartige tubenförmige Behälter werden bekanntlich durch Anschweißen eines Kopfstückes an einen tubenförmigen Hauptteil hergestellt. Meist wird der tubenförmige Hauptteil extrudiert und besteht aus Polyäthylen, das als Material meist dann Verwendung findet, wenn der tubenförmige Hauptteil aus einer einzigen Materialschicht gebildet ist. Da jedoch ein solcher tubenförmiger Behälter nur schwerlich bedruckbar ist, wird vorzugsweiseein Folienband aufgewalzt, auf das eine Beschriftung aufgedruckt ist, und anschließend wird das Material in eine tubenförmige Gestalt umgeformt, wobei zum Schluß die sich überlappenden Endabschnitte verbunden bzw. verschweißt werden.

Heutzutage besteht das Problem, dass der bedruckte Bereich auf der Außenseite des Foliensubstrates und damit auf der Außenseite des späteren Tubenrohrkörpers immer größer wird - der Trend geht zu einer echten Rundum-Bedruckung, die sich im Wesentlichen über einen Umfangswinkel von 360° erstreckt. Hier ist besonders problematisch, dass die Bedruckung, sprich die Druckfarben und die geschmolzene, verschweißbare Kunststoffschicht, beispielsweise LDPE keine Schweißverbindung eingehen, sodass eine Art Kerbeffekt resultiert und eine rinnenartige Längsvertiefung bzw. Bruchlinie auf der Außenseite der Längschweißnaht entsteht. Generell besteht bei der Herstellung von Schweißnähten das Problem, dass ohnehin durch die auftretenden Fließvorgänge der Verbindungs- bzw. Schweißbereich zumindest abschnittsweise dünner wird.

Ausgehend von dem vorgenannten Stand der Technik liegt der Erfindung die Aufgabe zugrunde, ein alternatives Verfahren zum Herstellen von Verpackungstuben anzugeben, aus dem ein flexibler Tubenrohrkörper mit verstärkter Längsschweißnaht resultiert, wobei die Verstärkung bevorzugt optisch und/oder haptisch kaum bis nicht wahrnehmbar sein soll. Insbesondere soll das Verfahren bevorzugt so ausgestaltet sein, dass eine Bedruckung der miteinander zu verbindenden Längsrandseiten, insbesondere eine Rundum-Bedruckung nicht nachteilig für das Verfahren ist bzw. das Verfahren so ausgestaltet ist, dass auch derartig bedruckte Foliensubstrate zur Fixierung der Rohrform fest miteinander verbunden werden können, wobei das Verfahren selbstverständlich auch für im Längsrandseitenbereich nicht bedruckte Foliensubstrate einsetzbar sein soll. Bevorzugt soll das Verfahren das ästhetische Erscheinungsbild von aus eine längsrandseitige Bedruckung, insbesondere eine Rundum-Bedruckung, aufweisenden Foliensubstraten hergestellten Tubenrohrkörpern gegenüber bekannten Verfahren verbessern.

Ferner besteht die Aufgabe darin, eine entsprechend verbesserte Verpackungstube anzugeben, die sich durch eine verstärkte (stabilere) Längschweißnaht bzw. Verbindung auszeichnet, wobei die Verpackungstube bevorzugt derart gestaltet ist, dass die Verstärkung optisch und/oder haptisch kaum bis nicht wahrnehmbar ist und insbesondere auch eine Bedruckung bis an oder in den Schweißbereich, insbesondere eine Rundum-Bedruckung des eingesetzten Foliensubstrates ermöglicht.

Diese Aufgabe wird hinsichtlich des Verfahrens mit den Merkmalen des Anspruchs 1 gelöst, d.h. bei einem gattungsgemäßen Verfahren dadurch, dass auf der Außenseite der (längsverschweißten) Rohrform auf die Längsschweißnaht ein flüssiger Lack aufgetragen und auf der Rohrform unter Ausbildung einer Lackschicht zumindest teilweise chemisch vernetzt wird. Anders ausgedrückt wird die Längschweißnaht mit einem Lack überlackiert und der Lack auf der Längschweißnaht chemisch vernetzt, d.h. es werden kovalente Bindungen zur zumindest teilweisen Aushärtung des Lacks zu einer Lackschicht ausgebildet. Grundsätzlich ist dabei eine vollumfängliche Lackierung der Rohrform möglich - bevorzugt ist jedoch eine Ausführungsvariante, bei der der Lack nur über einen Teilumfangswinkel im Bereich der Längsschweißnaht auf die Rohrform aufgetragen wird. Bevorzugt bleibt ein, ganz besonders bevorzugt größerer, Teilumfangswinkelbereich der Rohrform unlackiert.

Unter einer Bedruckung wird im Rahmen der vorliegenden Offenbarung eine Bedruckung, d. h. ein mindestens eine Druckfarbe umfassendes Druckbild auf der Außenseite des zur Tubenkörperherstellung eingesetzten Foliensubstrates bzw. der daraus hergestellten und durch Längsverschweißen fixierten Rohrform verstanden. Fakultativ kann oberhalb der das eigentliche Druckbild ausbildenden Bedruckung eine Klarlackschicht vorgesehen sein. Für den bevorzugten Fall, dass die Bedruckung und/oder die Klarlackschicht bis in den Längsrandseitenbereich des Foliensubstrates reichen/reicht kann der auf der Rohrform anzuhärtende Lack zur Ausbildung der stabilisierenden Lackschicht (falls vorgesehen) auf die Klarlackschicht oder alternativ unmittelbar auf die Bedruckung, das heißt das Druckbild aufgebracht werden.

Grundsätzlich kann der Lack sehr dünnflüssig bis sehr zähflüssig sein - wesentlich ist, dass er nach dem Aufbringen chemisch, d.h. kovalent, insbesondere dreidimensional, zur Ausbildung einer festen bzw. festeren Lackschicht vernetzt wird. Bevorzugt ist die Viskosität des Lacks aus einem Wertebereich zwischen 1 mPas (Millipascalsekunde) bis 10000 mPas, besonders bevorzugt zwischen 5 mPas und 2000 mPas, noch weiter bevorzugt zwischen 10 mPas und 500 mPas gewählt.

Hinsichtlich der Verpackungstube wird die Aufgabe mit den Merkmalen des Anspruchs 13 gelöst, d.h. bei einer gattungsgemäßen Verpackungstube dadurch, dass auf der Außenseite des Tubenrohrs auf der Längsschweißnaht eine Lackschicht aus einem auf den Tubenrohrkörper chemisch vernetzten Lack angeordnet ist.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale auch als verfahrensgemäß offenbart gelten und beanspruchbar sein.

Der Erfindung liegt der Gedanke zugrunde, zur Verstärkung der Längsschweißnaht auf diese einen Lack bzw. ein Lacksystem aufzubringen, welches im Anschluss an das Aufbringen auf der Rohrform chemisch ausgehärtet, sprich vernetzt wird, d.h. kovalente Bindungen ausgebildet werden. Anders ausgedrückt, wird die Längschweißnaht mit einem Lack überlackiert, dessen Bestandteile, insbesondere Moleküle und/oder Molekülketten (Oligomere), nach dem Aufbringen zur Ausbildung einer Lackschicht chemisch bzw. kovalent, insbesondere dreidimensional, vernetzt werden. Bevorzugt handelt es sich, wie später noch erläutert werden wird um einen strahlenhärtbaren, insbesondere UV-härtbaren Lack, insbesondere umfassend Photoinitiatoren, wobei der Lack dann durch Strahlung ausgehärtet wird. Auch ist der Einsatz eines durch Elektronenbestrahlung zu vernetzenden Lacks möglich. Grundsätzlich denkbar ist alternativ auch der Einsatz von thermisch härtenden Lacken, wobei dann die kovalente Vernetzung durch Wärmeenergieeintrag, beispielsweise über die Längschweißnaht, insbesondere ausschließlich über die Längschweißnaht oder alternativ oder zusätzlich über eine externe Wärmequelle durchgeführt wird. Besonders bevorzugt sind Lacke auf Acrylatbasis, wobei die Erfindung hierauf nicht beschränkt ist. Im Rahmen der Erfindung wird der flüssige Lack bevorzugt mit einer Temperatur unterhalb der Schmelztemperatur der Längsschweißnaht aufgetragen, wobei sich der Lack für den Fall, dass dieser auf die noch heiße Schweißnaht aufgetragen wird aufgrund des Wärmeübergangs weiter erwärmen kann. Bevorzugt ist es, die Längsschweißnaht vor dem stabilisierenden Lackauftrag, insbesondere durch eine Kontaktkühleinrichtung und/oder Besprühen mit einem Kühlfluid zu kühlen. Unabhängig vom Zeitpunkt des Lackauftragens kann es durch die Vernetzungsreaktion zu einem Lacktemperaturanstieg kommen.

Der Vorteil des Einsatzes eines Lackes bzw. der Ausbildung einer Lackschicht oberhalb der Längsschweißnaht besteht darin, dass eine erhebliche mechanische Verstärkung schon mit sehr geringen Dickenmaßen von insbesondere unter 100µm erzielbar ist. Darüber hinaus kann die Stoff- bzw. Materialklasse des zum Einsatz kommenden, kovalent vernetzbaren Lacks an die Materialklasse eines Schutzlackes (Klarlacks) und/oder eines Druckbildes (Bedruckung), des Foliensubstrates angepasst werden. Auch ist es denkbar den stabilisierenden Lack auf einen Foliensubstratsabschnitt im Schweißbereich außerhalb einer bzw. in Umfangsrichtung benachbart zu einer Bedruckung und/oder einer Klarlackschicht aufzubringen. Ebenfalls ist es möglich den stabilisierenden Lack oberhalb der Schweißnaht auf Foliensubstrate aufzubringen, die keine Bedruckung (Druckbild) und/oder keine Klarlackschicht aufweisen. Auch ist ein Aufbringen des stabilisierenden Lackes unmittelbar auf ein Druckbild möglich oder auf Foliensubstrate, die kein Druckbild (Bedruckung) sondern lediglich eine Klarlackschicht aufweisen. Auch ist es denkbar den stabilisierenden Lack auf einen Foliensubstratabschnitt im Schweißbereich außerhalb einer Bedruckung und/oder einer Klarlackschicht aufzubringen. Ebenfalls ist es möglich den stabilisierenden Lack oberhalb der Schweißnaht auf Foliensubstrate aufzubringen, die keine Bedruckung (Druckbild) und/oder keine Klarlackschicht aufweisen. Auch ist ein Aufbringen des stabilisierenden Lackes unmittelbar auf ein Druckbild möglich oder auf Foliensubstrate, die kein Druckbild (Bedruckung) sondern lediglich eine Klarlackschicht aufweisen. Die Dicke des Lackauftrags und damit der resultierenden Lackschicht und in der Folge die Stabilität des Schweißbereichs ist in weiten Bereichen schnell einstellbar bzw. wählbar. Auch kann das Aushärten bzw. Vernetzen in einer kurzen Zeitspanne durch entsprechende Wahl des Energieeintrags, insbesondere einer Strahlungsdosis durchgeführt werden. Ein weiterer Vorteil besteht in der Möglichkeit zu einem materialsparenden Einsatz des die mechanische Stabilität erhöhenden Lackes.

Grundsätzlich ist es, wie bereits angedeutet möglich, den Lack auf die noch heiße, noch nicht oder nur teilweise ausgehärtete Längschweißnaht aufzubringen. Alternativ ist es möglich den Lack auf eine bereits herabgekühlte Längschweißnaht nach Durchlaufen einer Kühlstrecke, insbesondere umfassend eine Kontakt- und/oder Fluidkühlung aufzutragen, also zu einem Zeitpunkt, zu dem die Längsschweißnaht zumindest weitgehend ausgehärtet ist.

Ein besonderer Vorteil des Einsatzes eines Lackes besteht darin, dass dieser auch bei im Schweißbereich, d.h. im Bereich der Längsrandkanten bedruckten Tubenkörpern, insbesondere aufweisend eine Rundum-Bedruckung zum Einsatz kommen kann, um die Längschweißnaht zu stabilisieren, wobei in diesem Fall die Bedruckung bevorzugt zumindest abschnittsweise, insbesondere ausschließlich abschnittsweise, mit dem Lack überlackiert wird. Für den fakultativen, bevorzugten Fall, dass auf der Bedruckung eine äußere Klarlackschicht bzw. Schutzlackschicht vorgesehen ist, ist es bevorzugt, wenn der Lack oberhalb von dieser aufgebracht wird. Für den Fall des Verzichts auf eine derartige Schutz- bzw. Klarlackschicht kann der (Stabilisierungs-)Lack unmittelbar auf die Bedruckung (Druckschicht) aufgebracht werden.

In Weiterbildung der Erfindung ist mit Vorteil vorgesehen, dass der Lack über die gesamte in Umfangsrichtung gemessene Breite der Längsschweißnaht auf die Rohrform aufgebracht wird, d.h. dass die Breite der nach der Vernetzung resultierenden Lackschicht mindestens der Breite der Längsschweißnaht entspricht. Grundsätzlich ist es, wie bereits angedeutet, möglich die Rohrform vollumfänglich, d.h. rundum zu lackieren, d.h. mit einer Lackschicht zu versehen, wobei es bevorzugt ist, die Lackschicht auf einen Teilumfangsabschnitt der Rohrform bzw. des resultierenden Tubenrohrkörpers zu begrenzen. Dabei ist es bevorzugt, die (in Umfangsrichtung gemessene) Breite der Lackschicht bzw. Breite des Auftragungsbereichs des Lacks aus einem Wertebereich zwischen 1mm und 10mm, bevorzugt zwischen 2mm und 6mm zu wählen bzw. auf ein solches Maß zu begrenzen.

Wie erläutert, ermöglicht es die Ausbildung einer Lackschicht auch im Längsrandseitenbereich bedruckte Foliensubstrate, ganz besonders bevorzugt vollumfänglich bedruckte Foliensubstrate einzusetzen. Bei solchen Foliensubstraten kann der Lack, zumindest abschnittsweise, über einen bedruckten Bereich des Foliensubstrates aufgetragen und oberhalb des Druckbildes die Lackschicht durch Vernetzen des Lacks ausgebildet werden. Eine Anpassung der Materialklasse des Lacks an die Materialklasse des Druckbildes, d. h. der mindestens eine Druckfarbe umfassten Bedruckung und/oder eines sich ggf. darauf befindlichen Klarlacks zur Gewährleistung einer guten Haftung des Lacks auf dem Druckbild ist möglich, mit der Folge der Erzielung hoher Adhäsionskräfte.

Wie eingangs erwähnt, ermöglicht es die Ausbildung einer Lackschicht mit einem geringst möglichen Materialauftrag auszukommen und dennoch die mechanische Stabilität bzw. Festigkeit der Schwachstelle der Längsschweißnaht erheblich zu erhöhen. Dabei kann in Weiterbildung der Erfindung in radialer Richtung, d. h. entlang einer Radialen gemessen die Lackschichtdicke (Materialstärke) in einem bezogen auf die Umfangsrichtung mittleren Bereich der Lackschicht auf einen Wert aus einem Wertebereich zwischen 1µm und 100µm, bevorzugt weniger als 100µm, ganz besonders bevorzugt zwischen 5µm und 50µm, noch weiter bevorzugt zwischen 10µm und 30µm realisiert werden. Fakultativ und bevorzugt kann vorgesehen werden, dass die Lackschicht in Richtung ihrer beiden in Umfangsrichtung beabstandeten Längsrandseiten abflacht. Zu diesem Zweck kann beispielsweise die Auftragungshöhe bzw. Dicke des Lacks in Richtung der jeweiligen Längsrandseiten reduziert werden bzw. abnehmen. Hierdurch kann ein besonders flacher und kaum merklicher Übergang zwischen einem nicht mit Lack beaufschlagten Oberflächenbereich der Rohrform und der Lackschicht hergestellt werden. Besonders bevorzugt ist es, wenn als Lack ein strahlenvernetzbarer Lack eingesetzt und durch Bestrahlung mit einer Strahlungsquelle, insbesondere durch Elektronenbestrahlung oder UV-Bestrahlung vernetzt wird. Bevorzugt enthält ein UV-härtbares Lacksystem hierzu entsprechend Photoinitiatoren. Möglich ist auch der Einsatz von elektronenstrahlhärtbaren Lacken, die dann durch Elektrodenbestrahlung vernetzt werden. Alternativ zu strahlenhärtbaren Lacken können grundsätzlich auch thermisch vernetzbare Lacke eingesetzt werden, wobei dann die kovalenten Verbindungen erzeugt werden, d.h. die Vernetzung initiiert wird durch Wärmeeintrag, beispielsweise über die Längschweißnaht und/oder externe Wärmequellen. Für den bevorzugten Fall des Einsatzes einer Digitaldrucktechnik zum Aufbringen des Lackes ist es bevorzugt, eine entsprechende Strahlenquelle, insbesondere einen UV-Strahler am und/oder benachbart zum Druckkopf anzuordnen.

Grundsätzlich ist der Einsatz der unterschiedlichsten Lackauftragtechniken, beispielsweise durch Sprühen, mittels eines Pinsels, durch Siebdruck, oder durch Tampondruck, etc. realisierbar. Ganz besonders bevorzugt ist das Aufbringen durch Digitaldruck, insbesondere mittels eines Digitaldruckkopfes (Tintenstrahldruckkopfes). Insbesondere die Digitaldruckvariante ermöglicht es die Auftragungsdicke einfach an die jeweiligen Anforderungen anzupassen und/oder über die Längsnahtbreite und/oder über die Längsnahtlängenerstreckung zu variieren, was grundsätzlich jedoch auch mit anderen Lackiertechniken möglich ist.

Insbesondere dann (jedoch nicht beschränkt hierauf), wenn der Lack auf einen bedruckten Bereich, insbesondere einen bedruckten Längsrandseitenbereich des Foliensubstrates aufgebracht wird ist es vorteilhaft, wenn der Lack pigmentfrei und/oder durchsichtig, insbesondere transparent ausgestaltet ist, um das darunter befindliche Druckbild durch den Lack hindurch betrachten zu können. Aufgrund der geringen Dickenerstreckung eines Lackes fällt auch bei Überlackierung einer Bedruckung dieses dem Betrachter kaum bis nicht auf. Für den Fall, dass aus Designgründen eine Verdeckung der Längsschweißnaht und/oder eine teilweise Verdeckung des Druckbildes oder etwaiger Druckmarken mittels der Lackschicht erwünscht ist, kann die Lackschicht alternativ mit Pigmenten versehen sein, um die Lackschicht teilweise oder vollständig undurchsichtig zu gestalten.

Ganz besonders bevorzugt ist eine Ausführungsvariante, bei der der Lack mindestens eine funktionale Komponente, beispielsweise eine antibakterielle Komponente, wie beispielsweise Silberpartikel und/oder andere antimikrobielle Partikel enthält. Zusätzlich oder alternativ kann der Lack als funktionale Komponente mindestens eine oxidative Komponente, beispielsweise Ti0₂ enthalten. Auch ist es möglich, dass der Lack aufgrund seiner Zusammensetzung als Barriereschicht zur Verbesserung der Sperrwirkung gegen Feuchtigkeits- und/oder Sauerstoffdurchtritt im Bereich der Schwachstelle Längsschweißnaht wirkt bzw. fungiert. So weisen viele vernetzte Acrylsysteme bereits per se bessere Barriereeigenschaften auf als das Tubenrohrkörpermaterial, insbesondere PE, PP oder andere Polyolefine.

Grundsätzlich ist es möglich den Lack weitgehend vollständig, insbesondere mit einem Vernetzungsgrad >90% oder höher zu vernetzen. Bevorzugt ist es jedoch von einer Vollvernetzung abzusehen und den Lack nur teilweise, insbesondere weitgehend zu vernetzen, um somit eine flexible und hoch dehnbare Lackschicht zu erhalten, die entsprechende Deformationen des Tubenkörpers mitmacht ohne zu reißen oder abzuplatzen. Denkbar sind beispielsweise Vernetzungsgrade aus einem Bereich zwischen 50% und 90%, insbesondere zwischen 60% und 85%. Insbesondere kann durch die Wahl des Vernetzungsgrades die Flexibilität und/oder Dehnbarkeit der Lackschicht an das Foliensubstrat angepasst werden. Insbesondere kann durch das Vorsehen eines Lackes eine maximale Elongation eingestellt werden, d.h. eine maximale Dehnbarkeit bzw. Ausdehnung, bevor es zu einem Bruch der Lackschicht kommt - dies ist insbesondere wichtig für den Belastungsfall "Knicken".

Der Vernetzungsgrad kann bei strahlenhärtbaren Lacken insbesondere durch Einstellung der Strahlendosis variiert werden, die wiederum von der Dauer und Strahlenquellenleistung abhängig ist. Zusätzlich oder alternativ ist der Zusatz von Vernetzungshemmern möglich, insbesondere auch um freie Radikale zu binden und/oder um freie Bindungen zu besetzen. Die Flexibilität/Dehnbarkeit wird vor allem auch durch geeignete Wahl des Molekulargewichtes von Oligomeren des Lacks gesteuert. Lange Ketten und niedrige Vernetzungsgrade führen zu dehnbaren Systemen.

Insbesondere dann, wenn eine chemische, d.h. kovalente Verbindung des Lacks bzw. der resultierenden Lackschicht mit dem Foliensubstrat erwünscht ist, ist es bevorzugt die Außenoberfläche des Foliensubstrates, insbesondere der Rohrform im (späteren) Auftragungsbereich für den Lack, d.h. im Bereich der späteren Lackschicht vorzubehandeln, insbesondere zu aktivieren. Hierzu können beispielsweise Plasma- oder Coronaaktivierungsverfahren oder auch eine Gasflammenaktivierung, etc. zum Einsatz kommen. Durch eine Aktivierung wird bevorzugt zudem eine Reduzierung der Oberflächenspannung der Schweißnaht und ggf. des hierzu benachbarten Bereichs, insbesondere eines Druckbildes und/oder einer Klarlackschicht und/oder einer unbedruckten und/oder unlackierten Tubenrohrkörperoberfläche erreicht, wie auch ein Reinigungseffekt erzielt. Darüber hinaus werden Tubenmaterialbindungen an der Oberfläche aufgebrochen, die dann zur kovalenten (An-)Bindung an bzw. mit den Bestandteilen, insbesondere Oligomeren, des Lacks zur Verfügung stehen und somit die Haftung der resultierenden Lackschicht zu dem Untergrund verbessern.

Das Schweißverfahren kann gemäß einer ersten Alternative kontinuierlich durchgeführt werden, indem ein bandförmiges Foliensubstrat von einer Rolle abgewickelt und entlang seiner Förderrichtung mithilfe von Umformmitteln zu der (zunächst endlosen) Rohrform geformt, verschweißt, lackiert und dann in einzelne Tubenrohrkörper abgelängt wird, wobei der Lackierschritt alternativ auch nach dem Ablängen an den bereits abgelängten Tubenrohrkörper realisiert werden kann. Als weitere Alternative ist es möglich das Foliensubstrat nicht im Endlosverfahren zu verschweißen sondern Foliensubstratstücke, die bereits die Länge des herzustellenden Tubenrohrkörpers haben zur Rohrform umzuformen und dann zu einem Tubenkörper durch Verschweißen der Längsrandseiten zu verschweißen und dann gemäß der Erfindung zu lackieren.

Für den Fall, dass die Bedruckung des Foliensubstrates auch im Bereich der Längsrandseiten vorgesehen ist, besteht das Problem, dass häufig zwischen der mindestens einen verschweißbaren Kunststoffschicht und dem Druck- bzw. der Bedruckung und/oder einer Klarlackschicht keine Schweißverbindung entsteht sondern eine Art Kerb- bzw. Bruchlinie, also eine rinnenartige Längsvertiefung in der Längsschweißnaht. Bei einer derartigen Ausführungsform ist es bevorzugt, den Lack in die Längsvertiefung einzubringen, so dass diese von dem Lack ausgefüllt wird, wobei sich der Lack bevorzugt zu beiden Seiten der Längsvertiefung über die gesamte Längsschweißnaht und ggf. darüber hinaus erstreckt. Hieraus resultiert eine Glättung der Längsschweißnaht bei gleichzeitiger mechanischer Verstärkung.

Die Erfindung führt auch auf eine Verpackungstube, umfassend einen flexiblen Tubenkörper aus einem mindestens eine verschweißbare Kunststoffschicht aufweisenden Foliensubstrat, insbesondere einem Laminat, welches alternativ aus der verschweißbaren Kunststoffschicht besteht. Bevorzugt ist der Tubenrohrkörper hergestellt nach einem zuvor beschriebenen Verfahren. Ebenfalls zeichnet sich der mit einem, insbesondere durch Formpressen (Compression Molding) oder Kunststoffspritzgießen erhaltenen Tubenkopf verbundene Tubenkörper durch eine Längsschweißnaht aus, an der zwei Längsrandseiten des Foliensubstrates, insbesondere unmittelbar miteinander und/oder einem separaten Kunststoffelement, insbesondere Kunststoffstreifen verschweißt sind, wobei erfindungsgemäß auf der Außenseite des Tubenrohres auf der Längsschweißnaht eine Lackschicht aus einem auf den Tubenrohrkörper chemisch vernetzten Lack angeordnet ist.

Im Hinblick auf mögliche Ausgestaltungsvarianten des Lacks und/oder der Lackschicht, beispielsweise im Hinblick auf die Lackschichtgeometrie (Dicke und/oder Breite) sowie sonstige Merkmale des Lacks und der Lackschicht oder des Tubenrohrkörpers wird auf die vorangehende Beschreibung verwiesen. Die dort im Zusammenhang mit dem vorgeschlagenen Verfahren offenbarten Merkmale sollen auch als verfahrensunabhängig im Hinblick auf die Ausgestaltung bzw. Weiterbildung des Tubenrohrkörpers mit seiner Lackschicht offenbart gelten und beanspruchbar sein.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: einen möglichen Ablauf eines nach dem Konzept der Erfindung ausgebildeten Tubenrohrkörperherstellungsverfahrens,
- Fig. 2:: eine vergrößerte, ausschnittsweise Querschnittsansicht eines Verbindungsbereichs von zwei auf Stoß angeordneten, miteinander verschweißten Längsrandseiten eines zuvor zur Rohrform umgeformten Foliensubstrates, wobei aus Übersichtlichkeitsgründen die Krümmung des als Laminat ausgebildeten Foliensubstrates nicht gezeigt ist, und
- Fig. 3:: eine alternative Verbindung von zwei überlappend angeordneten Längsrandseiten eines als Laminat ausgebildeten Foliensubstrates, wobei auch hier aus Übersichtlichkeitsgründen die Krümmung zur Rohrform nicht gezeigt ist.

In den Figuren sind gleiche Elemente und Elemente mit der gleichen Funktion mit den gleichen Bezugszeichen gekennzeichnet.

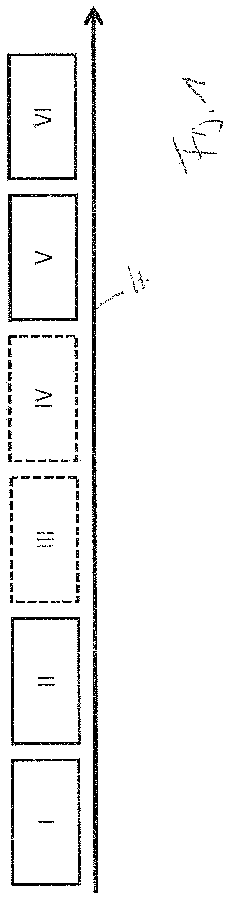

In Fig. 1 ist ein möglicher Ablauf eines erfindungsgemäßen Verfahrens zum Herstellen von flexiblen Tubenrohrkörpern gezeigt, wobei ein bevorzugt als Laminat ausgebildetes Foliensubstrat in einer Förderrichtung F gefördert bzw. transportiert wird. An einer mit I gekennzeichneten Schweißstation wird das zuvor in an sich bekannter Weise mit Umformmitteln zu einer Rohrform geformte Foliensubstrat im Bereich seiner Längsrandseiten verschweißt und damit die Rohrform fixiert. Nach Passieren der Schweißstation I gelangt die Rohrform mit daran an der Station I ausgebildeter Längsschweißnaht zu einer Kühlstation II, an welcher die Temperatur der Längsschweißnaht 1 insbesondere durch Kontaktkühlung und/oder durch Berieselung und/oder Besprühen mittels eines Kühlfluids, beispielsweise Wasser herabgekühlt wird. Weiter in der Förderrichtung F folgt eine Lackierstation V, an der die Längsschweißnaht mit einem Lack, beispielsweise einem UV-härtbaren oder thermisch härtbaren Lack lackiert wird, wobei an einer dann folgenden Aushärtestation VI ein zumindest teilweises Aushärten, d.h. chemisches Vernetzen des Lacks zur Ausbildung der Lackschicht auf der Außenseite der Rohrform zur Komplettierung des Tubenrohrkörpers resultiert. Die Aushärtestation VI kann in die Lackierstation integriert werden. Insbesondere für den Fall des Einsatzes eines thermisch härtbaren Lackes, jedoch auch bei strahlenhärtenden Lacken, ist es denkbar, auf die Kühlstation II zu verzichten oder diese der Aushärtestation VI in der Förderrichtung F nachzuordnen. Nicht gezeigt sind weiter folgende Bearbeitungsstationen, wie eine Ablängstation, in der das zunächst endlose Tubenrohr in einzelne Tubenrohrkörper abgelängt wird.

Bei Bedarf können zwischen der Schweißstation I, insbesondere nach der Kühlstation II und der Lackierstation V mindestens eine weitere Bearbeitungsstation III vorgesehen werden, so beispielsweise eine Gegenform bzw. mechanische Belastungsstation III, an der eine mechanische Kraftbeaufschlagung der Längsschweißnaht zur Reduzierung von Material- bzw. Schweißnahtspannungen und damit zur Verbesserung der Rundheit erfolgen kann. Zusätzlich oder alternativ kann eine Aktivierungsstation IV vorgesehen werden, an der die Außenoberfläche des zur Rohrform verschweißten Foliensubstrats aktiviert wird, beispielsweise durch Coronaaktivierung, Plasmaaktivierung oder Aktivierung mittels einer Gasflamme, etc.

Alternativ zu dem vorbeschriebenen Verfahren ist es denkbar, die Lack-und Außenhärtestation V, VI in der Förderrichtung F nach einer Ablängstation anzuordnen. Auch ist eine Variation des Verfahrens dahingehend denkbar, dass einzelne Foliensubstratzuschnitte zur Rohrform geformt und längsverschweißt werden unter Ausbildung einer Längsschweißnaht, die dann auf den einzelnen Tubenrohrkörpern überlackiert wird.

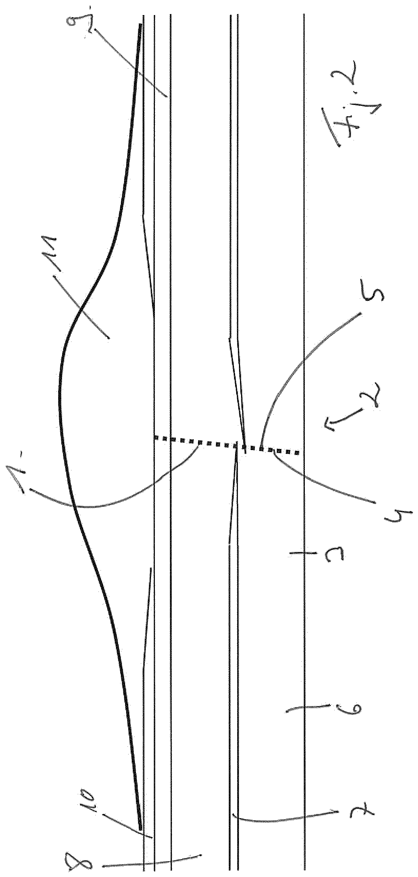

In Fig. 2 ist ein Verbindungsbereich eines zur Rohrform 2 umgeformten Foliensubstrates 3, vorliegend eines Laminates gezeigt, dessen parallele Längsrandseiten 4, 5 auf Stoß angeordnet und unter Ausbildung einer sich in die Zeichnung hineinerstreckenden Längsschweißnaht 1 miteinander verschweißt sind. Eine strichlierte Linie symbolisiert dabei die Längsschweißnaht 1 an, im Bereich derer die Längsrandseiten 4, 5, vorliegend unmittelbar materialschlüssig miteinander verbunden sind und im Schweißnahtbereich, d. h. im Materialschlussbereich unter Ausbildung sogenannter Entanglements ineinandergreifen. Das Foliensubstrat 3, ist wie erläutert, als Laminat ausgebildet, und umfasst eine innere verschweißbare Kunststoffschicht 6, beispielsweise aus LDPE, eine (mittlere) Barriereschicht 7, beispielsweise aus EVOH oder Aluminium, zur Verbesserung der Durchtrittssperrwirkung gegen Feuchtigkeit- und/oder Sauerstoff sowie eine äußere verschweißbare Kunststoffschicht 8, beispielsweise aus LDPE. Das Foliensubstrat 3 weist eine vorliegend als Rundum-Bedruckung ausgebildete Bedruckung 9 auf, die bis in den Bereich der Längsrandseiten 4, 5 hineinragt. Vorliegend befindet sich oberhalb (außerhalb) der, bevorzugt farbigen Bedruckung 9 (Druckbild) eine Schutzlackschicht aus Klarlack 10. Sowohl die Bedruckung 9 als auch die fakultative Klarlackschicht 10 sind bereits Bestandteil des zur Tubenkörperfertigung eingesetzten Foliensubstrates 3.

Etwaige Klebezwischenschichten sind in den Figuren nicht eingezeichnet. Auch können die einzelnen dargestellten Schichten wiederum jeweils aus mehreren Teilschichten bestehen.

Zu erkennen ist, dass außerhalb der Längsschweißnaht 1 erfindungsgemäß eine die mechanische Stabilität erhöhende und die Längsschweißnaht 1 überdeckende Lackschicht 11 vorgesehen ist, die in einem mittleren Bereich eine erhöhte bzw. maximale Dickenerstreckung aufweist und zu beiden in Umfangsrichtung beabstandeten Längseiten abflacht. Die Lackschicht 11 ist teilweise vernetzt, d.h. weist kovalent gebundene Molekühle, insbesondere mindestens ein Harz auf, wobei die Lackschicht 11 auf dem Foliensubstrat 3, genauer der Rohrform 2 ausgehärtet ist bzw. wurde, insbesondere durch Bestrahlung, insbesondere UV- oder Elektronenbestrahlung oder alternativ für das im Falle des Vorsehens eines thermisch härtbaren Lackes durch Wärmeenergieeintrag. Die Lackschicht 11 wirkt längsnahtverstärkend und erhöht die Stabilität der Schweißverbindung.

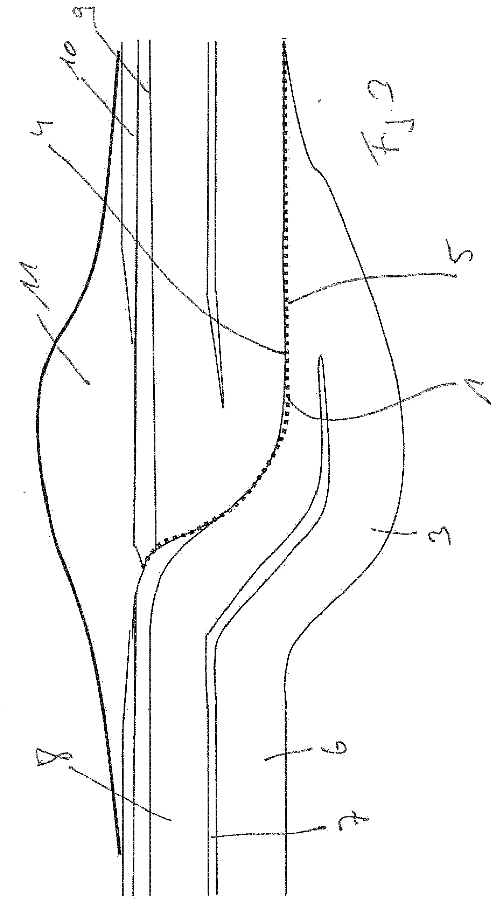

In Fig. 3 ist eine alternative, nach dem Konzept der Erfindung ausgebildete Verbindung 4, 5 eines ebenfalls als Laminat ausgebildeten Foliensubstrates 3 gezeigt. Zur Vermeidung von Wiederholungen wird im Folgenden im Wesentlichen nur auf die Unterschiede zu dem vorangehenden Ausführungsbeispiel eingegangen. Im Hinblick auf Gemeinsamkeiten wird auf die vorstehende Fig. 2 mit zugehöriger Figurenbeschreibung verwiesen.

Im Unterschied zu dem vorangehenden Ausführungsbeispiel sind die Längsrandseiten 4, 5 des Foliensubstrates 3 nicht auf Stoß sondern überlappend ausgebildet. Hierdurch erhält die Längsschweißnaht 1 eine von dem Ausführungsbeispiel gemäß Fig. 2 abweichende Geometrie.

### Bezugszeichen

- 1: Längsschweißnaht
- 2: Rohrform
- 3: Foliensubstrat (vorliegend beispielhaft ein Laminat)
- 4: Längsrandseite
- 5: Längsrandseite
- 6: innere verschweißbare Kunststoffschicht
- 7: Barriereschicht (beispielsweise EVOH oder Aluminium)
- 8: äußere verschweißbare Kunststoffschicht
- 9: Bedruckung
- 10: Klarlackschicht der Bedruckung
- 11: mechanisch verstärkende Lackschicht

- I: Schweißstation
- II: Kühlstation
- III: Umformstation
- IV: Aktivierungsstation
- V: Lackierstation
- VI: Aushärtestation

- F: Förderrichtung

## Patentansprüche

1. Verfahren zum Herstellen von Verpackungstuben umfassend einen flexiblen Tubenrohrkörper, wobei der mit einem Tubenkopf verbundene Tubenrohrkörper eine Längsschweißnaht (1) aufweist, an der zwei Längsrandseiten (4, 5) eines Foliensubstrates (3) verschweißt sind, wobei der flexible Tubenrohrkörper für Verpackungstuben aus einem, bevorzugt auf einer Außenseite eine Bedruckung aufweisenden, Foliensubstrat (3) besteht, welches mindestens eine verschweißbare Kunststoffschicht (6) aufweist oder aus dieser besteht und welches eine sich in eine Längsrichtung erstreckende erste Längsrandseite (4) und eine hierzu parallele und beabstandete zweite Längsrandseite (5) umfasst, wobei das Foliensubstrat (3) mit Umformmitteln zu einer Rohrform (2) geformt und die beiden Längsrandseiten (4, 5) unter Ausbildung einer Längsschweißnaht (1), insbesondere miteinander, verschweißt werden,
**dadurch gekennzeichnet,**
**dass** auf der Außenseite der Rohrform (2) auf die Längsschweißnaht (1) ein flüssiger Lack aufgetragen und auf der Rohrform (2) unter Ausbildung einer Lackschicht (11) zumindest teilweise chemisch vernetzt wird.

2. Verfahren nach Anspruch 1,
**dadurch gekennzeichnet,**
**dass** die Lackschicht (11) über die gesamte in Umfangsrichtung gemessene Breite der Längsschweißnaht (1) ausgebildet wird und/oder dass die Lackschicht (11) mit einer Breite aus einem Wertebereich zwischen 1mm und 10mm, bevorzugt zwischen 2mm und 6mm ausgebildet wird.

3. Verfahren nach einem der Ansprüche 1 oder 2,
**dadurch gekennzeichnet,**
**dass** der Lack, zumindest abschnittsweise, über einem bedruckten Bereich des Foliensubstrates (3) insbesondere, bevorzugt unmittelbar, auf einer Bedruckung (9) und/oder, bevorzugt unmittelbar, auf einer auf der Bedruckung (9) vorgesehenen Klarlackschicht (10) aufgebracht und dadurch die Lackschicht (11), zumindest abschnittsweise auf dem bedruckten Bereich, insbesondere auf der Bedruckung (9) und/oder auf der Klarlackschicht (10) ausgebildet wird.

4. Verfahren nach einem der vorhergehenden Ansprüche,
**dadurch gekennzeichnet,**
**dass** die Lackschicht (11) mit einer Dicke in einem bezogen auf die in Umfangsrichtung gemessene Lackschichtbreite mittleren Bereich aus einem Wertebereich zwischen 1µm und 100µm, bevorzugt zwischen 5µm und 50µm, ganz besonders bevorzugt zwischen 10µm und 30µm ausgebildet wird, wobei sich die Lackschicht (11) bevorzugt in Richtung ihrer Längsrandseiten (4, 5) abflacht.

5. Verfahren nach einem der vorhergehenden Ansprüche,
**dadurch gekennzeichnet,**
**dass** als Lack ein strahlenvernetzbarer Lack eingesetzt und durch Bestrahlung mit einer Strahlungsquelle, insbesondere durch UV-Bestrahlung oder Elektronenbestrahlung, nach dem Aufbringen auf die Rohrform (2) vernetzt wird, oder dass als Lack ein thermisch vernetzbarer Lack eingesetzt wird, der durch Wärmeenergiebeaufschlagung nach dem Aufbringen auf die Rohrform (2) vernetzt wird.

6. Verfahren nach einem der vorhergehenden Ansprüche, **dadurch gekennzeichnet,**
**dass** der Lack durch Sprühen, mittels eines Pinsel, durch Siebdruck, durch Tampondruck oder durch Digitaldruck, insbesondere mittels eines Digitaldruckkopfes, aufgebracht wird.

7. Verfahren nach einem der vorhergehenden Ansprüche,
**dadurch gekennzeichnet,**
**dass** der Lack pigmentfrei und/oder die Lackschicht (11) durchsichtig, insbesondere transparent ist und/oder dass der Lack mindestens eine funktionale Komponente, insbesondere eine antibakterielle Komponente, und/oder oxidative Komponente und/oder eine Barrierekomponente gegen Feuchtigkeits- und/oder Sauerstoffdurchtritt enthält.

8. Verfahren nach einem der vorhergehenden Ansprüche,
**dadurch gekennzeichnet,**
**dass** der Vernetzungsgrad der Lackschicht (11) so eingestellt ist, dass die Lackschicht (11) flexibel ist.

9. Verfahren nach einem der vorhergehenden Ansprüche,
**dadurch gekennzeichnet,**
**dass** eine Außenoberfläche des Foliensubstrates (3), insbesondere der Rohrform (2), im Bereich der späteren Lackschicht (11) vorbehandelt, insbesondere aktiviert wird, bevorzugt durch Plasma-oder Coronabehandlung.

10. Verfahren nach einem der vorhergehenden Ansprüche,
**dadurch gekennzeichnet,**
**dass** der Lack mit dem Foliensubstrat (3) chemisch vernetzt wird.

11. Verfahren nach einem der vorhergehenden Ansprüche,
**dadurch gekennzeichnet,**
**dass** das Foliensubstrat (3) bandförmig ausgebildet ist und durch das Längsverschweißen ein Endlosrohr gebildet wird, das zur Ausbildung der Tubenrohrkörper entsprechend abgelängt wird, wobei der Lack auf das Endlosrohr oder die abgelängten Tubenrohrkörper aufgebracht wird, oder dass das Foliensubstrat (3), insbesondere durch Ablängen aus einem bandförmigen Foliensubstratband, jeweils als Foliensubstratabschnitt, insbesondere in der Länge des Tubenrohrkörpers vorliegt und zur direkten Ausbildung des Tubenrohrs zu der Rohrform (2) umgeformt, längsverschweißt und mit dem Lack versehen wird.

12. Verfahren nach einem der vorhergehenden Ansprüche,
**dadurch gekennzeichnet,**
**dass** die Längsschweißnaht (1) mit einer rinnenartigen Längsvertiefung hergestellt wird und der Lack in die Längsvertiefung eingebracht wird, sodass er diese ausfüllt.

13. Verpackungstube, umfassend einen flexiblen Tubenrohrkörper aus einem mindestens eine verschweißbare Kunststoffschicht (8) aufweisenden oder daraus bestehenden Foliensubstrat (3), wobei der mit einem Tubenkopf verbundene Tubenrohrkörper eine Längsschweißnaht (1) aufweist, an der zwei Längsrandseiten (4, 5) des Foliensubstrates (3) verschweißt sind,
**dadurch gekennzeichnet,**
**dass** auf der Außenseite des Tubenrohres auf der Längsschweißnaht (1) eine Lackschicht (11) aus einem auf dem Tubenrohrkörper chemisch vernetzten Lack angeordnet ist.

14. Verpackungstube nach Anspruch 13,
**dadurch gekennzeichnet,**
**dass** die Lackschicht (11) über die gesamte in Umfangsrichtung gemessene Breite der Längsschweißnaht (1) ausgebildet wird und/oder dass die Lackschicht (11) mit einer Breite aus einem Wertebereich zwischen 1mm und 10mm, bevorzugt zwischen 2mm und 6mm ausgebildet ist und/oder dass die Lackschicht (11), zumindest abschnittsweise, über einem bedruckten Bereich des Foliensubstrates (3), insbesondere, bevorzugt unmittelbar, auf einer Bedruckung (9) und/oder, bevorzugt unmittelbar, auf einer auf der Bedruckung (9) befindlichen Klarlackschicht (10), angeordnet ist und/oder dass die Lackschicht (11) mit einer Dicke in einem bezogen auf die in Umfangsrichtung gemessene Lackschichtbreite mittleren Bereich aus einem Wertebereich zwischen 1µm und 100µm, bevorzugt zwischen 5µm und 50µm, ganz besonders bevorzugt zwischen 10µm und 30µm ausgebildet wird, wobei sich die Lackschicht (11) bevorzugt in Richtung ihrer Längsrandseiten (4, 5) abflacht.

15. Verpackungstube nach einem der Anspruch 13 oder 14,
**dadurch gekennzeichnet,**
**dass** der Lackschicht (11) pigmentfrei und/oder die Lackschicht (11) durchsichtig, insbesondere transparent ist und/oder dass die Lackschicht (11) mindestens eine funktionale Komponente, insbesondere eine antibakterielle Komponente, und/oder oxidative Komponente und/oder eine Barrierekomponente gegen Feuchtigkeit- und/oder Sauerstoffdurchtritt enthält und/oder dass die Lackschicht (11) eine rinnenartige Längsvertiefung der Längsschweißnaht (1) ausfüllt.

## Claims

1. A method for manufacturing packaging tubes comprising a flexible, tubular tube body,
the tubular tube body, which is connected to a tube head, having a longitudinal weld seam (1) at which two longitudinal edge sides (4, 5) of a film substrate (3) are welded, the flexible tubular tube body for packaging tubes being composed of a film substrate (3), which preferably has a printing on an outside,
said film substrate having at least one weldable plastic layer (6) or being composed of said plastic layer and comprising a first longitudinal edge side (4), which extends in a longitudinal direction, and a second longitudinal edge side (5), which is parallel to and spaced apart from said first longitudinal edge side, the film substrate (3) being formed into a tube shape (2) by means of forming means and both longitudinal edge sides (4, 5) being welded, in particular together, to form a longitudinal weld seam (1),
**characterized in that**
a liquid varnish is applied to the longitudinal weld seam (1) on the outside of the tube shape (2) and is, at least partially, chemically crosslinked on the tube shape (2) to form a varnish layer (11).

2. The method according to claim 1,
**characterized in that**
the varnish layer (11) is formed over the entire width of the longitudinal weld seam (1) as measured in the circumferential direction and/or that the varnish layer (11) has a width from a range between 1 mm and 10 mm, preferably between 2 mm and 6 mm.

3. The method according to claim 1 or 2,
**characterized in that**
the varnish is, at least in sections, applied above a printed area of the film substrate (3), in particular, preferably directly, on a printing (9) and/or, preferably directly, on a clear varnish layer (10) provided on the printing (9), the varnish layer (11) thus being formed, at least in sections, on the printed area, in particular on the printing (9) and/or on the clear varnish layer (10).

4. The method according to any one of the preceding claims,
**characterized in that**
the varnish layer (11) has a thickness from a range between 1 µm and 100 µm, preferably between 5 µm and 50 µm, particularly preferably between 10 µm and 30 µm, in a central area in relation to the width of the varnish layer as measured in the circumferential direction, the varnish layer (11) preferably flattening out towards its longitudinal edge sides (4, 5).

5. The method according to any one of the preceding claims,
**characterized in that**
a radiation-crosslinkable varnish is used as varnish and that said varnish is crosslinked by being irradiated by a radiation source, in particular by means of UV irradiation or electron irradiation, after the varnish has been applied to the tube shape (2), or that a thermally crosslinkable varnish is used as varnish, which is crosslinked by applying thermal energy after said varnish has been applied to the tube shape (2).

6. The method according to any one of the preceding claims,
**characterized in that**
the varnish is applied by spraying, by means of a brush, by screen printing, by pad printing or by digital printing, in particular by means of a digital print head.

7. The method according to any one of the preceding claims,
**characterized in that**
the varnish is unpigmented and/or the varnish layer (11) is clear, in particular transparent, and/or that the varnish comprises at least one functional component, in particular an antibacterial component and/or oxidative component and/or a barrier component against the passage of moisture and/or oxygen.

8. The method according to any one of the preceding claims,
**characterized in that**
the degree of crosslinking of the varnish layer (11) is adjusted in such a manner that the varnish layer (11) is flexible.

9. The method according to any one of the preceding claims,
**characterized in that**
an external surface of the film substrate (3), in particular of the tube shape (2), is pre-treated, in particular activated, in the area of the later varnish layer (11), preferably by means of a plasma or corona treatment.

10. The method according to any one of the preceding claims,
**characterized in that**
the varnish is chemically crosslinked to the film substrate (3).

11. The method according to any one of the preceding claims,
**characterized in that**
the film substrate (3) is formed as a strip and that a continuous tube is realized by means of the longitudinal welding, said continuous tube being cut to an appropriate length in order to form the tubular tube bodies, the varnish being applied to the continuous tube or on the cut-to-length tubular tube bodies, or that the film substrate (3) is in the form of respective film substrate sections having, in particular, the same length as the tubular tube body, in particular by being cut to length from a strip-shaped film substrate strip, and that said film substrate is formed into the tube shape (2), longitudinally welded and provided with the varnish in order to form the tubular tube in a direct manner.

12. The method according to any one of the preceding claims,
**characterized in that**
the longitudinal weld seam (1) is manufactured having a trough-like longitudinal recess and that the varnish is filled into the longitudinal recess, the varnish thus filling said longitudinal recess.

13. A packaging tube comprising a flexible tubular tube body made of a film substrate (3) having at least one weldable plastic layer (8) or being composed of said plastic layer,
the tubular tube body, which is connected to a tube head, having a longitudinal weld seam (1) at which two longitudinal edge sides (4, 5) of the film substrate (3) are welded,
**characterized in that**
a varnish layer (11) of a varnish which is chemically crosslinked on the tubular tube body is disposed on the longitudinal weld seam (1) on the outside of the tubular tube.

14. The packaging tube according to claim 13,
**characterized in that**
the varnish layer (11) is formed over the entire width of the longitudinal weld seam (1) as measured in the circumferential direction and/or that the varnish layer (11) has a width from a range between 1 mm and 10 mm, preferably between 2 mm and 6 mm, and/or that the varnish layer (11) is, at least in sections, disposed above a printed area of the film substrate (3), in particular, preferably directly, on a printing (9) and/or, preferably directly, on a clear varnish layer (10) provided on the printing (9), and/or that the varnish layer (11) has a thickness from a range between 1 µm and 100 µm, preferably between 5 µm and 50 µm, particularly preferably between 10 µm and 30 µm, in a central area in relation to the width of the varnish layer as measured in the circumferential direction, the varnish layer (11) preferably flattening out towards its longitudinal edge sides (4, 5).

15. The packaging tube according to claim 13 or 14,
**characterized in that**
the varnish layer (11) is unpigmented and/or the varnish layer (11) is clear, in particular transparent, and/or that the varnish layer (11) comprises at least one functional component, in particular an antibacterial component and/or oxidative component and/or a barrier component against the passage of moisture and/or oxygen, and/or that the varnish layer (11) fills a trough-like longitudinal recess of the longitudinal weld seam (1).

## Revendications

1. Procédé pour la production de tubes d'emballage comprenant un corps de tube tubulaire flexible,
le corps de tube tubulaire, qui est relié à une tête de tube, ayant une soudure longitudinale (1) à laquelle deux bords longitudinaux (4, 5) d'un substrat de film (3) sont soudés, le corps de tube tubulaire flexible pour des tubes d'emballage étant composé d'un substrat de film (3) ayant une impression, de préférence sur un côté extérieur,
ledit substrat de film ayant au moins une couche de plastique (6) soudable ou étant composé de ladite couche de plastique soudable et ledit substrat de film comprenant un premier bord longitudinal (4), qui s'étend dans une direction longitudinale, et un deuxième bord longitudinal (5), qui est parallèle au premier bord longitudinal et espacé de celui-ci, le substrat de film (3) étant formé en forme tubulaire (2) au moyen de moyens de formation et les deux bords longitudinaux (4, 5) étant soudés, notamment l'un à l'autre, formant ainsi une soudure longitudinale (1),
**caractérisé en ce**
**qu'**un vernis liquide est appliqué sur la soudure longitudinale (1) sur le côté extérieur de la forme tubulaire (2) et que ledit vernis liquide est, au moins partiellement, réticulé chimiquement sur la forme tubulaire (2), formant ainsi une couche de vernis (11).

2. Procédé selon la revendication 1,
**caractérisé en ce que**
la couche de vernis (11) est formée sur toute la largeur de la soudure longitudinale (1) mesurée dans la direction circonférentielle et/ou que la couche de vernis (11) a une largeur d'une plage de valeurs entre 1 mm et 10 mm, de préférence entre 2 mm et 6 mm.

3. Procédé selon la revendication 1 ou la revendication 2,
**caractérisé en ce que**
le vernis est, au moins par sections, appliqué au-dessus d'une partie imprimée du substrat de film (3), notamment, de préférence directement, sur une impression (9) et/ou, de préférence directement, sur une couche de vernis transparent (10) prévue sur l'impression (9), et que la couche de vernis (11) est, au moins par sections, ainsi formée sur la partie imprimée, notamment sur l'impression (9) et/ou sur la couche de vernis transparent (10).

4. Procédé selon l'une quelconque des revendications précédentes,
**caractérisé en ce que**
dans une partie centrale par rapport à la largeur de la couche de vernis mesurée dans la direction circonférentielle, la couche de vernis (11) a une épaisseur d'une plage de valeurs entre 1 µm et 100 µm, de préférence entre 5 µm et 50 µm, plus préférentiellement entre 10 µm et 30 µm, la couche de vernis (11) aplatissant, de préférence dans la direction de ses bords longitudinaux (4, 5).

5. Procédé selon l'une quelconque des revendications précédentes,
**caractérisé en ce**
**qu'**un vernis réticulable par irradiation est utilisé comme vernis et qu'il est réticulé après l'application sur la forme tubulaire (2) par irradiation par une source de rayonnement, notamment par irradiation UV ou par faisceau d'électrons, ou qu'un vernis réticulable de manière thermique est utilisé comme vernis, ledit vernis étant réticulé par l'application d'énergie thermique après l'application sur la forme tubulaire (2).

6. Procédé selon l'une quelconque des revendications précédentes,
**caractérisé en ce que**
le vernis est appliqué par pulvérisation, au moyen d'un pinceau, par sérigraphie, par l'impression au tampon ou par l'impression numérique, notamment au moyen d'une tête d'impression numérique.

7. Procédé selon l'une quelconque des revendications précédentes,
**caractérisé en ce que**
le vernis ne contient pas de pigment et/ou que la couche de vernis (11) est limpide, notamment transparente, et/ou que le vernis comprend au moins un composant fonctionnel, notamment un composant antibactérien et/ou un composant oxydatif et/ou un composant barrière contre le passage de l'humidité et/ou de l'oxygène.

8. Procédé selon l'une quelconque des revendications précédentes,
**caractérisé en ce que**
le degré de réticulation de la couche de vernis (11) est ajusté de telle manière que la couche de vernis (11) est flexible.

9. Procédé selon l'une quelconque des revendications précédentes,
**caractérisé en ce**
**qu'**une surface extérieure du substrat de film (3), notamment de la forme tubulaire (2), est prétraitée, notamment activée, dans la zone de la future couche de vernis (11), de préférence par un traitement par plasma ou corona.

10. Procédé selon l'une quelconque des revendications précédentes,
**caractérisé en ce que**
le vernis est réticulé chimiquement avec le substrat de film (3).

11. Procédé selon l'une quelconque des revendications précédentes,
**caractérisé en ce que**
le substrat de film (3) est formé en forme de bande et qu'un tube sans fin est réalisé par le soudage longitudinal, ledit tube étant coupé en longueur de manière appropriée pour former les corps de tube tubulaires, le vernis étant appliqué sur le tube sans fin ou sur les corps de tube tubulaires coupés en longueur, ou que le substrat de film (3) se présente sous la forme de parties de substrat de film, ayant notamment la même longueur que le corps de tube tubulaire, notamment par la coupe à longueur d'une bande de substrat de film en forme de bande, et que ledit substrat de film est formé en forme tubulaire (2), soudé de manière longitudinale et pourvu du vernis pour former le tube tubulaire.

12. Procédé selon l'une quelconque des revendications précédentes,
**caractérisé en ce que**
la soudure longitudinale (1) est réalisée comprenant un renfoncement longitudinal en forme de rainure et que le vernis est versé dans le renfoncement longitudinal de sorte qu'il remplisse ledit renfoncement longitudinal.

13. Tube d'emballage, comprenant un corps de tube tubulaire flexible composée d'un substrat de film (3) ayant au moins une couche de plastique (8) soudable ou étant composée de ladite couche de plastique soudable, le corps de tube tubulaire, qui est relié à une tête de tube, ayant une soudure longitudinale (1) à laquelle deux bords longitudinaux (4, 5) du substrat de film (3) sont soudés,
**caractérisé en ce**
**qu'**une couche de vernis (11) d'un vernis qui est réticulé chimiquement sur le corps de tube tubulaire est disposée sur la soudure longitudinale (1) sur le côté extérieur du tube tubulaire.

14. Tube d'emballage selon la revendication 13,
**caractérisé en ce que**
la couche de vernis (11) est formée sur toute la largeur de la soudure longitudinale (1) mesurée dans la direction circonférentielle et/ou que la couche de vernis (11) a une largeur d'une plage de valeurs entre 1 mm et 10 mm, de préférence entre 2 mm et 6 mm, et/ou que la couche de vernis (11) est, au moins par sections, disposée au-dessus d'une partie imprimée du substrat de film (3), notamment, de préférence directement, sur une impression (9) et/ou, de préférence directement, sur une couche de vernis transparent (10) prévue sur l'impression (9), et/ou que la couche de vernis (11) a une épaisseur d'une plage de valeurs entre 1 µm et 100 µm, de préférence entre 5 µm et 50 µm, plus préférentiellement entre 10 µm et 30 µm, dans une partie centrale par rapport à la largeur de la couche de vernis mesurée dans la direction circonférentielle, la couche de vernis (11) aplatissant, de préférence dans la direction de ses bords longitudinaux (4, 5).

15. Tube d'emballage selon la revendication 13 ou la revendication 14,
**caractérisé en ce que**
la couche de vernis (11) ne contient pas de pigment et/ou que la couche de vernis (11) est limpide, notamment transparente, et/ou que la couche de vernis (11) comprend au moins un composant fonctionnel, notamment un composant antibactérien et/ou un composant oxydatif et/ou un composant barrière contre le passage de l'humidité et/ou de l'oxygène, et/ou que la couche de vernis (11) remplit un renfoncement longitudinal en forme de rainure de la soudure longitudinale (1).
